# NEUE EUROPÄISCHE PATENTSCHRIFT

(11) **EP 0 952 161 B3**
(45) Veröffentlichungstag und Bekanntmachung des Hinweises auf die Entscheidung über den Einspruch: **17.01.2007**
(45) Hinweis auf die Patenterteilung: 28.05.2003
(21) Anmeldenummer: 99106022.9
(22) Anmeldetag: 25.03.1999
(51) Int. Cl.: C08F 2/26, C09D 157/00

(54) **VERWENDUNG VON WÄSSRIGEN POLYMERDISPERSIONEN**
USE OF AQUEOUS POLYMER DISPERSIONS
UTILISATION DE DISPERSIONS AQUEUSES DE POLYMÈRES

(30) Priorität: 24.04.1998 DE 19818393
(43) Veröffentlichungstag der Anmeldung: 27.10.1999
(73) Patentinhaber: BASF SE, 67056 Ludwigshafen (DE)
(72) Erfinder: Gerst, Matthias, Dr., 67433 Neustadt (DE); Schuler, Bernhard, Dr., 68199 Mannheim (DE); Urban, Dieter, Dr., 67346 Speyer (DE)

(56) Entgegenhaltungen:
- WO-A-99/24514
- WO-A-99/25780
- WO-A-99/36444
- DE-A- 19 749 643
- DE-A- 19 750 618
- DE-A- 19 801 442
- US-A- 4 200 562
- US-A- 4 204 023
- US-A- 5 763 012

## Beschreibung

Diese Erfindung betrifft die Verwendung von wäßrigen Polymerdispersionen, wobei das Polymer aufgebaut ist aus folgenden radikalisch polymerisierbaren Verbindungen:
a) 40 bis 100 Gew.-% eines sogenannten Hauptmonomeren, ausgewählt aus C₁-C₂₀-Alkyl(meth)acrylaten, Vinylester von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethem von 1 bis 10 C-Atome enthaltenden Alkoholen, aliphatischen Kohlenwasserstoffen mit2bis 8 C-Atomen und 1 oder 2 Doppelbindungen oder Mischungen dieser Monomere,
b) 0 bis 20 Gew.-% einer ethylenisch ungesättigten Säure oder eines ethylenisch ungesättigten Säureanhydrids oder Säureamids,
c) 0 bis 40 Gew.-% einer weiteren ethylenisch ungesättigten Verbindung,
und die Polymerdispersion ein Emulgatorgemisch enthält, als Bindemittel in Klebstoffen, dadurch gekennzeichnet, dass das Emulgatorgemisch, eine Verbindung der Formel 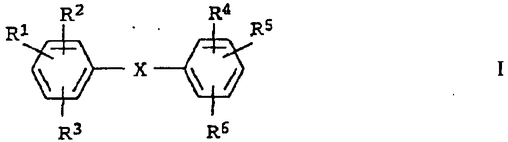 worin X für O, S, CH₂, NH oder NR⁷, ein oder zwei der Reste R¹ bis R⁶ für eine Gruppe SO₃- K⁺ und die übrigen Reste R¹ bis R⁶ für H oder eine C₁-C₁₈-Alkylgruppe, R⁷ für eine C₁-C₁₈-Alkylgruppe und K für ein Gegenkation stehen und eine Verbindung der Formel

R⁸-O- (Z-O)ₙ-SO₃^{⊖}K^{⊕} II

worin die Variablen folgende Bedeutung haben:
- R⁸:: C₁-C₁₈-Alkyl
Z: CH2-CH2 oder 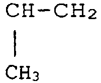
- n:: eine ganze Zahl von 1 bis 50
- K:: ein Kation,
enthält, wobei das Emulgatorgemisch
a) 10 bis 80 Gew.-% einer Verbindung der Formel I und
b) 90 bis 20 Gew.-% einer Verbindung der Formel II enthält,
bezogen auf die Emulgatormischung der Verbindungen der Formeln I und II.

Bei der Emulsionspolymerisation werden Monomertröpfchen in Wasser mit Hilfe eines Emulgators emulgiert. Art und Menge des Emulgators bestimmen entscheidend die Stabilität der Monomertröpfchen und nach der Polymerisation die Stabilität der enthaltenen Polymerteilchen. Gewünscht ist naturgemäß, eine ausreichende Stabilisierungmit möglichst geringer Emulgatormengezuerreichen.

Bei der späteren Verwendung, z.B. zur Beschichtung Substraten, verbleibt der Emulgator nach Entfernung des Dispersionswassers im Endprodukt. Auch die anwendungstechnischen Eigenschaften werden daher vom Emulgator beeinflußt.

Fürviele Anwendungen ist ein hoherinnerer Zusammenhalt (Kohäsion) gewünscht. Bisherbekannte Emulgatorenvermindem vielfach den inneren Zusammenhalt z.B. in einer Beschichtungsmasse.

Aus der EP-A-469 295 sind Beschichtungen für Betondachsteine bekannt Die Beschichtungsmasse enthält eine Verbindung der Formel I als Emulgator.

Aufgabe der vorliegenden Erfindung waren daher Emulgatorsysteme, welche eine hohe Stabilität von wäßrigen Polymerdispersionen bewirken und bei der späteren Verwendung der wäßrigen Polymerdispersionen den inneren Zusammenhalt in der Beschichtungsmasse erhöhen oder zumindest nicht herabsetzen.

Demgemäß wurde die eingangs definierte Verwendung gefunden.

Das Emulgatorgemisch enthält eine Verbindung der Formel 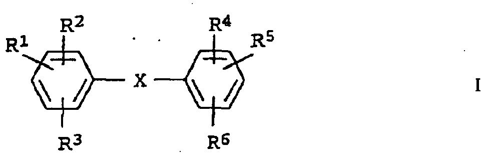 wobei X für O, S, CH₂, NH oder NR⁷, ein oder zwei der Reste R¹ bis R⁶ für eine Gruppe SO₃. K⁺ und die übrigen R¹ bis R⁶ für H oder eine C₁-C₁₈ Alkylgruppe, R⁷ für eine C₁-C₈ Alkylgruppe und K für eine Gegenkation stehen.

VorzugsweisestehtXfürO. Vorzugsweise stehen ein oder zwei der Reste R¹ bis R⁶ für eine C₁-C₁₈ Alkylgruppe, insbesondere für eine C₆-C₁₈ Alkylgruppe und die übrigen Reste R¹ - R⁶ für H-Atome und die Sulfonatgruppen.

Bei K handelt es sich um ein Gegenkation; vorzugsweise ausgewählt aus den Kationen von H, den Alkalimetallen, Ammonium. Besonders bevorzugt ist Natrium. Bei Verbindungen der Formel I handelt es sich üblicherweise auch um ein Gemisch von Verbindungen mit unterschiedlichen Substitutionsgrad (mono- oder dialkyliert) und unterschiedlichen Substitutionsposition der Substituierten (d.h. der Sulfonatgruppen und der ein oder zwei Alkylgruppen). Verbindungen mit der Formel I werden unter den Warenzeichen Dowfax® 2A von Dow Chemical Company vertrieben.

Das erfindungsgemäße Emulgatorgemisch enthält weiterhin eine Verbindung der Formel

R⁸-O-(Z-O)ₙ-SO⁻₃k⁺ II

wobei die Variablen folgende Bedeutung haben:
- R⁸:: C₁-C₁₈ Alkyl, vorzugsweise C₈-C₁₄ Alkyl
- Z:: CH₂-CH₂ oder

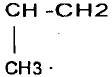

- n:: eine ganz Zahl von 1 bis 50, vorzugsweise von 5 bis 40
- K+:: ein Kation, z.B. H+, ein Alkalikation von Na, K oder Ammonium

Unter Verbindungen der Formel II sollen auch Verbindungen verstanden werden, in denen Z beide obengenannte Bedeutungen haben kann. Es handelt sich daher um Verbindungen mit Ethylenoxidgruppen, Propylenoxidgruppen oder mit Ethylen- und Propylenoxidgruppen.

Verbindungen der Formel II werden unter der Bezeichnung Disponil® FES 77 von Henkel vertrieben.

Das Emulgatorgemisch besteht vorzugsweise aus
10 bis 80 Gew.-% eines Emulgators, der Formel I
20 bis 90 Gew.-% eines Emulgators, der Formel II.

Besonders bevorzugt beträgt der Anteil des Emulgators der Formel I 20 bis 80 Gew.-% und der des Emulgators der Formel II 80 bis 20 Gew.%. Die Gewichtsangaben sind auf das Emulgatorgemisch bezogen.

Das erfindungsgemäße Emulgatorgemisch wird vorzugsweise als Emulgator bei der Emulsionspolymerisation verwendet.

Der Emulgator bzw. das Emulgatorgemischwird üblicherweise in Mengen von 0,1 bis 15Gew.-%, vorzugsweise von 0,2 bis 5,0, besonders bevorzugt von 0,5 bis 2,5Gew.-%, bezogen auf die zu polymerisierenden Monomeren verwendet. Die erhaltene Polymerdispersion enthält demgemäß die genannten Emulgatormengen. Es können auch noch weitere Emulgatoren mit verwendet werden, sie können bei der Emulsionspolymerisation eingesetztwerden oder nachträglich zugemischt werden. Eine Emulgatorgesamtmenge im allgemeinen von 15 Gew.-%, insbesondere 10 Gew.-%, bezogen auf die Monomeren, wird im allgemeinen nicht überschritten.

Das erhaltene Polymer ist vorzugsweise aus folgenden radikalisch polymerisierbaren Verbindungen (Monomere) aufgebaut:
a) 40 bis 100 Gew.-% eines sogenannten Hauptmonomeren, ausgewählt aus C₁-C₂₀-Alkyl(meth)acrylaten, Vinylester von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethem von 1 bis 10 C-Atome enthaltenden Alkoholen, aliphatischen Kohlenwasserstoffen mit 2 bis 8 C-Atomen und 1 oder 2 Doppelbindungenoder Mischungen dieser Monomeren.
b) 0 bis 20 Gew.-% einer ethylenisch ungesättigten Säure, eines ethylenisch ungesättigten Säureanhydrids oder Säureamids und
c) 0 bis 40 Gew.-% einerweiteren ethylenisch ungesättigten Verbindung.

Die Gewichtsangaben sind auf das Polymer bezogen.

Besonders bevorzugt enthält das Polymer 60 bis 100 Gew.-%, insbesondere 80 bis 100 Gew.-% Monomere a) 0 bis 10 Gew.-%, insbesondere 0 bis 5 Gew.-% Monomere b) und 0 bis 30 Gew.-%, insbesondere 0 bis 15 Gew.-% Monomere c).

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat, 2-Ethylhexylacrylat, n-Butylmethacrylat und iso-Butylmethacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol α- und p-Methylstyrol, α-Butylstyrol, 4-n-Butylstyrol, 4-n-Decylstyrol und vorzugsweise Styrol in Betracht Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylethervon 1 bis 4C-Atome enthaltenden Alkoholen.

Als Kohlenwasserstoffe mit 2 bis 8C-Atomen und zwei olefinischen Doppelbindungen seien Butadien, Isopren und Chloropren und mit einer Doppelbindung z.B. Ethylen genannt.

Vorzugsweise handelt es sich bei Hauptmonomeren a) um folgende Monomere oder ein Gemisch folgender Monomere: Styrol, C₁-C₁₀-Alkyl(meth)acrylate, insbesondere n-Butylacrylat und (Meth)acrylnitril, insbesondere Acrylnitril.

Bevorzugte Monomere b) sind ethylenisch ungesättigte Säuren, z.B. Sulfonsäuren oderinsbesondere Carbönsäuren. Genannt seien: (Meth)acrylsäure oder Itaconsäure, Dicarbonsäuren und deren Anhydride oder Halbester, z.B. Maleinsäure, Fumarsäure und Maleinsäureanhydrid, Acrylamidopropansulfonsäure, Vinylsulfonsäure, Sulfoethyl- bzw. Sulfopropyl(meth)acrylat bzw. deren Salze, insbesondere Ammonium- oder Alkalisalze und (Meth)acrylamid, N-Vinylpyrrolidon, N-Vinylcaprolactam, N-Vinyl-imidazol.

Als weitere Monomere c) seien z.B. Glycidylacrylat, Glycidylmethacrylat, Diallyldimethylammoniumchlorid und insbesondere Hydroxylgruppen enthaltende Monomere, z.B. C₁-C₁₅ Hydroxyalkyl(meth)acrylate genannt.

Bei der Emulsionspolymerisation werden insbesondere wasserlösliche Initiatoren z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid, verwendet.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren fürdie Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendetwerden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butythydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindungin Wasserbestimmtist. Imallgemeinenbeträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglykolsäureethylacrylester, Mercaptoethanol, Mercaptopropyltrimethoxysilan oder tert.-Dodecylmercaptan. Der Anteil dieser Regler kann insbesondere 0 bis 0,3 Gew.-%, bevorzugt 0,02 bis 0,3 Gew.-% bezogen auf das Polymerisat, betragen.

Die Emulsionspolymerisation erfolgt in der Regel bei 30 bis 95, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisations zone zuführt.

Die Artund Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der
Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte> 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweisedurch Zusatz von Saat (EP81083), durch Zugabe überschüssiger Emulgatormengen oder durch Zugabe von Miniemulsionen erfolgen. Ein weiterer Vorteil, der mit der niedrigen Viskosität bei hohem Feststoffgehalteinhergeht, ist das verbesserte Beschichtungsverhalten beihohen Feststoffgehalten. Die Erzeugung einer neuen/neuer Teilchengeneration/en kann zu einem beliebigen Zeitpunkt erfolgen. Er richtet sich nach den füreineniedrige Viskösität angestrebten Teilchengrößenverteilung.

Die erhaltene Polymerdispersion ist stabil. Koagulat ist nur in geringen Mengen vorhanden.

Bei der Verwendung der Polymerdispersion z.B. als Bindemittel werden gute anwendungstechnische Eigenschaften, insbesondere ein hoher innerer Zusammenhalt (Kohäsion) festgestellt. Die Polymerdispersion wird als Bindemittel in Klebstoffen verwendet. Derwäßrigen Dispersionen können für die jeweilige Verwendung Zusatzstoffe, z.B. Pigmente, Füllstoffe, Verlaufsmittel,Entschäumer, Verdicker etc. zugesetztwerden.

### Beispiele

### I. Herstellung der Dispersionen:

In einem Polymeristionsreaktor werden 116 g Wasser und 0,05 Gewichtsteile, bezogen auf 100 Gew.-Teile Monomere einer Styroldispersionen (Polymerisat) mit einem gewichtsmittleren Teilchendurchmesser von 30 nm, auf 85°C unter Rühren erwärmt und dann unterweiterem Rühren 10 Gew.-% von Zulauf 2 zugegeben.

Nach 5 min. werden Zulauf 1 und der Rest von Zulauf 2 gleichzeitig gestartet und mit konstanter Zulaufgeschwindigkeit in 180 min dosiert. Nach dem Ende des Zulaufs 1 wird noch 30 min bei 85°C gerührt. Bei dieser Temperatur werden unter Rühren zeitgleich 0,16 Gew.-Teile, bezogen auf 100 Gew.Teile Monomere einer 10 %igen Lösung von tert.-Butylhydroperoxidin Wasser sowie 0,16Gew.-Teile, bezogen auf 100 Gew.- Teile Monomere einer wäßrigen Lösung von Natriumdisulfit-Aceton Adduktzudosiert. Die Dispersion wurdesodann auf Raumtemperaturabgekühlt und miteiner 15 %igen wäßrigen NaOH auf pH=7 neutralisiert.

Der Feststoffgehalt der Dispersion ist auf 55 - 57 % eingestellt.

Folgende Abkürzungen wurdenverwendet:
- BA: n-Butylacrylat
- EHA: 2-Ethylhexylacrylat
- MMA: Methylmetacrylat
- S: Styrol
- MA: Methylacrylat
- AS: Acrylsäure
- tDMK: tert.-Dodecylmercaptan
- Disponil FES77: 30%ige wäßrige Lösung des Natriumsalzes des Schwefelsäurehalbesters von mit 30 Ethyloxideinheiten ethoxiliertem C12-C14-Alkylrestes (Formel II)
- Dowfax 2A1: 45%igewäßrige Lösung des Natriumsalzes des mit einem C12-C14-Alkylrest und zwei Sulfonylresten derivatisierten Diphyenlethers (s.Formel I)
- NLS: 45%ige wäßrige Lösung des Natriumsalzes von Laurylsulfat
- NaPS: Natriumperoxodisulfat

### Zulauf 1 = Emulsionszulauf

242 g Wasser
0,05 Gew.-Teile (bezogen auf 100 Gew.-Teile Monomere) tDMK
Gesamtmenge an Monomere: 560 g
Artder Monomere siehe Tabellen
Art und Menge der Emulgatoren siehe Tabellen

### Zulauf 2 = Initiatorzulauf:

Menge NaPS (7 Gew.-%ig in Wasser) siehe Tabellen

### II. Prüfmethoden

### a) Herstellung der Prüfstreifen

Die zu prüfende Dispersion für Papieretiketten wird im Verhältnis 75/25 (bezogen auf Feststoff) mit einer handelsüblichen wäßrigen Kolophoniumharzester-Dispersion (Tacolyn 3179, Fa. Hercules) abgemischt. Dispersionen für Klebebänder werden nichtmit Kolophoniumharzester-Dispersionen abgemischt. Die Mischung bzw. Dispersion wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird handelsüblichesweißes Etikettenpapier (Flächengewicht. 80g/m²) bzw. handelsübliche OPP-Folie (Stärke 30 µ) vorbehandelt, aufgelegt und miteinem Handrollerfest angerollt. Das so hergestellte Etiketten- bzw. Folienlaminat wird in Streifen von 0,5 inch bzw. 1,0 inch und von 2 cm Breite geschnitten. Diese Streifen werdenvorder Prüfung mindestens 24h im Normklima gelagert.

### b) Prüfung der Scherfestigkeit als Maß fürdie Kohäsion (in Anlehnung an FINAT FTM 7)

Nach Abziehen des silikonisierten Papiers wird der Etiketten- bzw. Folienprüfstreifen so auf den Rand eines Prüfblechs aus Edelstahl verklebt, daß sich eine Verklebungsfläche von 0,5 inch x 0,5 inch (Folienstreifen) bzw. 1,0 x 1,0 inch (Papieretiketten)ergibt. 20 Minuten nach dem Verkleben wird am überstehenden Ende beider Papieretiketten des Papierstreifensein 1000 g-Gewicht befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.

### c) Prüfung der Schälfestigkeit als Maßfür die Adhäsion (in Anlehnung an FINAT FTM 1)

Nach Abziehen des silikonisierten Papiers wird ein 2 cm breiter Etiketten-Prüfstreifen bzw. Folienprüfstreifen auf ein Prüfblech aus Edelstahl verklebt. Umgebungsbedingungen: 23°C, 50% relative Luftfeuchtigkeit. 1 Minute nach der Verklebung wird der Streifen mit Hilfe einer Zugprüfmaschine in einem Winkel von 180°C mit einer Geschwindigkeit von 300 mm/min abgezogen. Als Schälfestgkeit wird die dafür im Mittel erforderliche Kraft in N/2cm als Mittelwert aus den Ergebnissen vondrei Prüfkörpern angegeben. Zusätzlich wird das Bruchbild beurteilt.

| Monomere: 56BA, 28EHA, 15MMA, 1AS | | | | | |
|---|---|---|---|---|---|
| Nr. | Disponil FES77 | Dowfax | Schälwert Chrom sofort, 300mm/min, [N/2cm] | Kohäsion [c] | Emulsionsentmischung in [%] [b] |
| 1 X | 1,0 | 0 | 3,0 | 57 | 20 |
| 2x | 0,8 | 0 | 2,7 | 90 | 0 |
| 3x | 0 | 1,0 | 2,9 | 234 | 30 |
| 4 | 0,4 | 0,4 | 3,0 | 284 | 0 |
| 5 | 0,7 | 0,3 | 2,5 | 198 | 14 |
| 6 | 0,2 | 0,8 | 3,0 | 230 | 0 |
| | | | | | |

| Monomere: 60EHA, 22BA, 15MA, 2S,1AS | | | | | |
|---|---|---|---|---|---|
| Nr. | Disponil FES77 | Dowfax | Schälwert Chrom sofort, 300mm/ min, [N/ 2cm] | Kohäsion [c] | Emulsionsentmischung in [%][b] |
| 7x | 1,0 | 0 | 2,9 | 330 | 1 |
| 8X | 0 | 1,0 | 5,2 | 3446 | 87 |
| 9 | 0,8 | 0,2 | 4,4 | 1914 | 1 |
| x zum Vergleich | | | | | |
| [b] Es wurde die Entmischungvon 100 ml Emulsion nach 180 min gemessen. Die angegebenen Werte in [%] beziehen sich auf die gebildete Menge an klarer Flüssigkeit, die sich von derursprünglichen Emulsion getrennt hat | | | | | |
| [c] Messung bei Raumtemperaturin in, Fläche 1*1 inch², Belastung 1000g | | | | | |

## Patentansprüche

1. Verwendung von wässrigen Polymerdispersionen, wobeidas Polymer aufgebaut ist aus folgenden radikalisch polymerisierbaren Verbindungen:
a) 40 bis 100 Gew.-% eines sogenannten Hauptmonomeren, ausgewählt aus C1-C20-Alkyl(meth)acrylaten, Vinylester von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomere,
b) 0 bis 20 Gew.-% einer ethylenisch ungesättigten Säure oder eines ethylenisch ungesättigten Säureanhydrids oder Säureamids,
c) 0 bis 40 Gew.-% einer weiteren ethylenisch ungesättigten Verbindung,
und die Polymerdispersion ein Emulgatorgemisch enthält, als Bindemittel in Klebstoffen,
**dadurch gekennzeichnet, dass** das Emulgatorgemisch, eine Verbindung der Formel 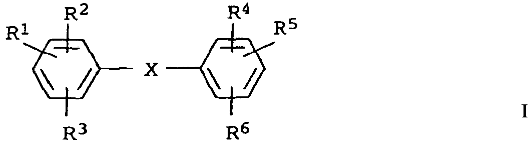 worin x für O, S, CH₂, NH oder NR⁷, ein oder zwei der Reste R¹ bis R⁶ für eine Gruppe SO₃- K⁺ und die übrigen Reste R¹ bis R⁶ für H oder eine C1-C18-Alkylgruppe, R⁷ für eine C1-C18-Alkylgruppe und K für ein Gegenkation stehen und eine Verbindung der Formel
R⁸-O-(Z-O)ₙ-SO₃^{⊖}K^{⊕} II
worin die Variablen folgende Bedeutung haben:
R⁸: C1-C18-alkyl
Z : CH2-CH2 oder 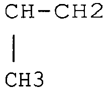
n: eine ganze Zahl von 1 bis 50
K: ein Kation
enthält, wobei das Emulgatorgemisch
a) 10 bis 80 Gew.-% einer Verbindung der Formel I und
b) 90 bis 20 Gew.-% einer Verbindung der Formel II enthält,
bezogen auf die Emulgatormischung der Verbindungen der Formeln I und II.

2. Verwendung gemäß Anspruch 1, **dadurch gekennzeichnet, dass** das Emulgatorgemisch
a) 20 bis 80 Gew.-% einer Verbindung der Formel I und
b) 80 bis 20 Gew.-% einer Verbindung der Formel II enthält.

3. Verwendung gemäß Anspruch 1 oder 2, **dadurch gekennzeichnet, dass** die Polymerdispersion 0,1 bis 15 Gew.-Teile des Emulgatorgemischs, bezogen auf 100 Gew.-Teile Polymer, enthält.

## Claims

1. The use of aqueous polymer dispersions as binder in adhesives, in which the polymer is built up from the following free-radically polymerizable compounds:
a) from 40 to 100% by weight of what is known as a principal monomer selected from C₁-C₂₀-alkyl (meth)acrylates, vinyl esters of carboxylic acids with up to 20 carbon atoms, vinylaromatic compounds of up to 20 carbon atoms, ethylenically unsaturated nitriles, vinyl halides, vinyl ethers or allyl ethers of C₁-C₁₀ alcohols, aliphatic hydrocarbons of 2 to 8 carbon atoms and 1 or 2 double bonds, or mixtures of these monomers,
b) from 0 to 20% by weight of an ethylenically unsaturated acid or of an ethylenically unsaturated acid anhydride or acid amide,
c) from 0 to 40% by weight of a further ethylenically unsaturated compound,
and the polymer dispersion comprising an emulsifier mixture, wherein the emulsifier mixture comprises a compound of the formula 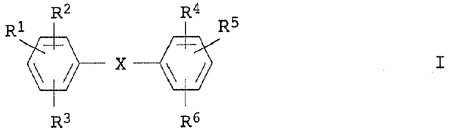 in which X is 0, S, CH₂, NH or NR⁷, one or two of the radicals R¹ to R⁶ are a group SO₃-K⁺ and the remainder of the radicals R¹ to R⁶ are H or a C₁-C₁₈-alkyl group, R⁷ is a C₁-C₁₈-alkyl group and K is a countercation and a compound of the formula
R⁸-O-(Z-O)ₙ-SO₃^{⊖}K^{⊕} II
in which the variables have the following meanings:
R⁸: C₁-C₁₈₋alkyl
Z: CH₂-CH₂ or 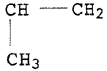
n: an integer from 1 to 50
K: a cation,
wherein the emulsifier mixture comprises
a) from 10 to 80% by weight of a compound of the formula I and
b) from 90 to 20% by weight of a compound of the formula II,
based on the emulsifier mixture of the compounds of the formulae I and II.

2. The use according to claim 1, wherein the emulsifier mixture comprises
a) from 20 to 80% by weight of a compound of the formula I and
b) from 80 to 20% by weight of a compound of the formula II.

3. The use according to claim 1 or 2, wherein the polymer dispersion comprises from 0.1 to 15 parts by weight of the emulsifier mixture based on 100 parts by weight of polymer.

## Revendications

1. Utilisation de dispersions aqueuses de polymère comme liant dans les adhésifs, le polymère étant élaboré à partir des composés suivants polymérisables de manière radicalaire :
a) 40 à 100% en poids de ce qu'on appelle un monomère principal, choisi parmi les (méth)acrylates d'alkyle en C₁ à C₂₀, les esters vinyliques d'acides carboxyliques contenant jusqu'à 20 atomes de carbone, les aromatiques de vinyle contenant jusqu'à 20 atomes de carbone, les nitriles éthyléniquement insaturés, les halogénures de vinyle, les vinyléthers ou allyléthers d'alcools comprenant 1 à 10 atomes de carbone, les hydrocarbures aliphatiques comprenant 2 à 8 atomes de carbone et 1 ou 2 doubles liaisons ou des mélanges de ces monomères,
b) 0 à 20% en poids d'un acide éthyléniquement insaturé ou d'un anhydride d'acide ou d'un amide d'acide éthyléniquement insaturés,
c) 0 à 40% en poids d'un autre composé éthyléniquement insaturé,
et la dispersion de polymère contient un mélange d'émulsifiant, **caractérisée en ce que** le mélange d'émulsifiants, contient un composé de formule 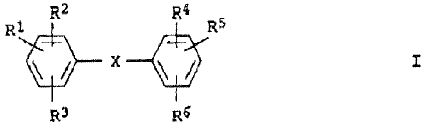 dans laquelle X représente 0, S, CH₂, NH ou NR⁷, un ou deux des radicaux R¹ à R⁶ représentent un groupe SO₃⁻K⁺ et les autres radicaux R¹ à R⁶ représentent H ou un groupe alkyle en C₁ à C₁₈, R⁷ représente un groupe alkyle en C₁ à C₁₈, et K un contre-ion et
un composé de formule
R⁸-O-(Z-O)ₙ-SO₃⁻K⁺ II
dans laquelle les variables ont la signification suivante:
R⁸ représente un groupe alkyle en C₁ à C₁₈
Z représente CH₂-CH₂ ou 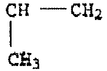
n représente un nombre entier de 1 à 50
K représente un cation,
le mélange d'émulsifiant comprenant
a) 10 à 80 en poids d'un composé de formule I et
b) 90 à 20 en poids d'un composé de formule II,
par rapport au mélange d'émulsifiant des composés des formules I et II.

2. Utilisation selon la revendication 1, **caractérisée en ce que** le mélange d'émulsifiants contient
a) 20 à 80% en poids d'un composé de formule I et
b) 80 à 20% en poids d'un composé de formule II.

3. Utilisation selon la revendication 1 ou 2 **caractérisée en ce que** la dispersion aqueuse contient 0,1 à 15 parties en poids du mélange d'émulsifiant, par rapport à 100 parties en poids de polymère.
